# EUROPEAN PATENT SPECIFICATION

(11) **EP 2 742 980 B1**
(45) Date of publication and mention of the grant of the patent: **28.12.2016**
(21) Application number: 13003586.8
(22) Date of filing: 17.07.2013
(51) Int. Cl.: A63H 33/00, B62B 9/26

(54) **Maze bead toy integrated in bumper bars / bumper bar toys**
kugelspielzeug integriert in Stoßfänger/Stoßfängerspielzeug
Jouet de labyrinthe à perles intégré dans des arceaux de poussette/jouet d'arceau de poussette

(30) Priority: 11.12.2012 EP 12196420
(43) Date of publication of application: 18.06.2014
(73) Proprietor: Ecoprams limited, Ilford Essex IG3 9UU (GB)
(72) Inventor: Fateha Khanam, Choudhury, Seven Kings, Ilford, Essex IG3 8SE (GB)

(56) References cited:
- CN-Y- 201 404 687
- GB-A- 2 426 959
- US-A- 2 330 538
- US-A1- 2006 273 612
- US-B1- 8 256 793

## Description

Nowadays strollers/buggys/prams lack an entertainment feature to soothe the child. This toy is an educational toy, either teaching the child colours of the rainbow and primary colours such as red, yellow, blue, green. A maze toy includes a rod/wire (3) in a frame that is of substantially uniform cross-sectional configuration over its entire length and is configured to also form multiple curves either with the wire/rod (3). A carriage which has its own shape which makes the wire/rod slidable along the frame (5). A channel structure has two ends connected to the two slider members respectively. The channel structure and the wire/rod frame are dimensionally related so to form the unique way for the journey the wire/rod or even the maze beads can travel freely so to create styles of valleys. Toy can be integrated or as a row of maze bead toy, consisting of balls which flow freely from one end of the stroller bumper bar to the other. The toy can also have the option of electronic lights and a multifunctional button system. The toy in particular relating to this invention may contain lights or chimes within the beads. This invention is purely created for the entertainment and educational purpose which meets pre-school educational quality in particular providing eye co-ordination techniques and learning colours (2, 4 and 6) for early learning.

Document US-A-2006/273612 discloses an example of stroller with bumper bar having a toy.

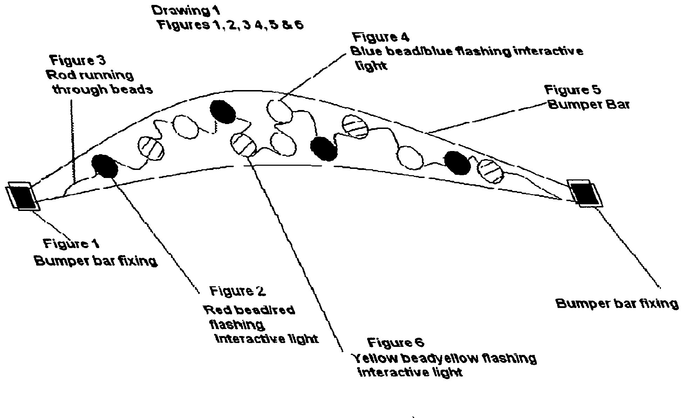

This invention can be given the credit to a fixed toy system to providing better alternative than loose toys placed in front of the child which has a repetitive habit of falling out of the stroller.
1. Each bead would be red, blue, and yellow, repeated 3 times over in the rod totaling to 12, the balls could have the possibility of having lights and sound, see figure(s) 2,4 and 6 drawing 1. May have the potential to also have other colours of the rainbow.
2. The rod would be spiral shaped, rod can be of steel/aluminium/metal, see figure 3 drawing 1.
3. Each bead can be easily pushed to one end of the handle of stroller to the other to perform the entertainment, see handle figure 5 drawing 1.

The rod would be spiral shaped, wire/rod can be of steel/aluminium/metal, see figure 3 drawing 1.

Twelve beads of three different colours; red, yellow and blue inserted through a spiral rod of either steel/aluminum or metal integrated inside the handle of the stroller in front of the child. Beads could have the possibility of having sound and interactivity involved. See drawing 1.

Beads; each bead is located/runs through a spiral shaped either steel/aluminium/metal rod, the beads have a hole through the centre consisting twelve in the same manner which can be easily moved along the spiral shaped rod from one end of the handle to another, see drawing 1.

The maze bead toy is inserted in the hollow handle through the hole directly in the centre of the bead see drawing 1 figure 3. The channel that the maze bead toy is integrated on can be of different types of valley.

## Claims

1. A bumper bar (5) for strollers having an integrated toy, ***characterised in that*** it comprises a channel structure, a wire rod (3) of substantially uniform cross-section over its entire length, said wire rod being movable in said channel structure, said wire rod having multiple curves so as to create valleys, a plurality of beads (2, 4, 6) having a hole through the centre, said wire (3) extending through said hole, said channel structure and said wire rod (3) being dimensionally related so as to form a unique way for said beads to travel, such that said beads, in use, can travel through said valleys formed by said wire in said channel structure.

2. A bumper bar (5) for strollers having an integrated toy, as claimed in claim 1, wherein the colours of the beads are red, blue and yellow repeated to a total of 12 beads.

3. A bumper bar (5) for strollers having an integrated toy, as claimed in claim 1 or claim 2, further comprising electronic lights with a button system.

4. A bumper bar (5) for strollers having an integrated toy, as claimed in any one of claims 1 to 3, wherein some beads have sound, light or chimes.

5. A bumper bar (5) for strollers having an integrated toy, as claimed in any one of claims 1 to 4, further comprising fixings (1) at each end of the bumper bar for fixing the bumper bar to a stroller.

## Patentansprüche

1. Ein Frontbügel (5) für Kinderwagen mit integriertem Spielzeug, ***dadurch gekennzeichnet, dass*** er eine Kanalstruktur enthält, einen Walzdraht (3) mit einem im Wesentlichen gleichförmigen Querschnitt über die gesamte Länge; besagter Walzdraht ist innerhalb der besagten Kanalstruktur beweglich; besagter Walzdraht hat mehrere Krümmungen die Täler formen; mehrere Perlen (2, 4, 6) mit einem Loch in der Mitte; besagter Draht (3) führt jeweils durch besagtes Loch; die besagte Kanalstruktur und der besagte Walzdraht (3) stehen in dimensionalem Zusammenhang zueinander, so dass sie eine einzigartige Bahn formen, entlang derer die Perlen gleiten können, so dass besagte Perlen während des Einsatzes durch besagte Täler gleiten können, die von besagtem Walzdraht in besagter Kanalstruktur geformt werden.

2. Ein Frontbügel (5) für Kinderwagen mit integriertem Spielzeug gemäß Anspruch 1, wobei die Perlen rot, blau und gelb sind; dies wird wiederholt so dass sich insgesamt 12 Perlen ergeben.

3. Ein Frontbügel (5) für Kinderwagen mit integriertem Spielzeug gemäß Anspruch 1 oder Anspruch 2, der weiterhin elektronische Lichter mit einem Tastensystem aufweist.

4. Ein Frontbügel (5) für Kinderwagen mit integriertem Spielzeug gemäß Ansprüchen 1 bis 3, wobei einige Perlen Klang- oder Lichteffekte oder einen Glockenton haben.

5. Ein Frontbügel (5) für Kinderwagen mit integriertem Spielzeug gemäß Ansprüchen 1 bis 4, der weiterhin Befestigungselemente (1) an beiden Enden des Frontbügels aufweist, mittels derer der Frontbügel an einem Kinderwagen befestigt werden kann.

## Revendications

1. Un arceau de maintien (5) pour poussette avec jouet intégré, ***caractérisé en ce* qu'**il comprend une rainure et un fil rigide (3) à la section transversale substantiellement uniforme sur toute sa longueur, ledit fil rigide pouvant se déplacer librement dans ladite rainure et présentant de nombreuses courbes de manière à créer des creux, une pluralité de billes (2, 4, 6) percées d'un trou en leur centre, ledit fil (3) passant dans ledit trou et ladite rainure et étant dimensionné afin de créer un circuit pour le déplacement des billes, de manière à ce que, pendant l'usage, lesdites billes puissent se déplacer dans lesdits creux formés par ledit fil dans ladite rainure.

2. Un arceau de maintien (5) pour poussette avec jouet intégré, comme stipulé dans la revendication 1, où les billes sont de couleurs rouge, bleue et jaune répétées jusqu'à un total de 12 billes.

3. Un arceau de maintien (5) pour poussette avec jouet intégré, comme stipulé dans la revendication 1 ou la revendication 2, mais comprenant en plus des lumières électroniques avec un système de bouton.

4. Un arceau de maintien (5) pour poussette avec jouet intégré, comme stipulé dans les revendications 1 à 3, où certaines des billes sont dotées de sons, de lumières ou de grelots.

5. Un arceau de maintien (5) pour poussette avec jouet intégré, comme stipulé dans les revendications 1 à 4, mais comprenant en plus des fixations (1) à chaque extrémité de l'arceau de maintien pour installer l'arceau de maintien sur une poussette.
